# EUROPEAN PATENT APPLICATION

(11) **EP 3 640 751 A1**
(43) Date of publication of application: **22.04.2020**
(21) Application number: 18201226.0
(22) Date of filing: 18.10.2018
(51) Int. Cl.: G05B 17/02

(54) **APPARATUS FOR GAS ANALYSIS AND EMISSION PREDICTION**

(71) Applicant: ABB Schweiz AG, 5400 Baden (CH)
(72) Inventor: Becker, Christoph, 60599 Frankfurt am Main (DE)
(74) Representative: Marks, Frank

(57) **Abstract**

The present invention relates to an apparatus for gas analysis and emission prediction. The apparatus comprises an input unit, a processing unit, and an output unit. The input unit is configured to provide the processing unit with measurement sensor data relating to an emission source. The measurement sensor data comprises a plurality of process parameters of the emission source and at least one process parameter of the emission source for a subsequent required time period. The measurement sensor data comprises a plurality of measured gas concentrations of the emission source. The processing unit is configured to implement a gas emission prediction model. The gas emission prediction model has been trained comprising utilisation of the plurality of process parameters and the plurality of measured gas concentrations. The gas emission prediction model is configured to determine a predicted gas concentration for a time period comprising utilisation of at least one process parameter for that time period. For the required time period the output unit is configured to output a gas concentration that is a measured gas concentration for the required time period if this is available or a predicted gas concentration for the required time period.

## Description

### FIELD OF THE INVENTION

The present invention relates to an apparatus for gas analysis and emission prediction, a system for gas analysis and emission prediction and a method for gas analysis and emission prediction.

### BACKGROUND OF THE INVENTION

Automatic measuring systems (AMS) for gas analysis and predictive emissions monitoring systems (PEMS) are independent products. An AMS uses gas analysers for detection of emissions. A PEMS uses a software solution for determination of gas concentration. PEMS defines the relationship between the characteristic process parameters of an emissions source, for example, temperature, pressure, volume flow and emissions concentration. The PEMS model is modelled by an applications specialist.

For emissions sources where there is no historic process data and associated parallel AMS measurements, these must first be collected in a data collection phase and subsequently used to create a PEMS Model (learning phase). Here it is possible to capture the important data for all operating conditions of the emissions source under all possible environmental conditions so that the resulting PEMS model can predict the correct measurements, at a later time, without AMS. For economic reasons, however, attempts are made to keep this learning phase as short as possible (in range of days / weeks). Two points that have particular impact on the quality of the PEMS Model are:
1. Recording of different weather conditions through the year,
2. Recoding of the entire range of emissions concentrations of the emissions source.

The second point is important because such plant conditions are difficult to simulate and the operator of an emission source may have no interest in bringing this about. In particular, the emission of the maximum concentration is in many cases regulated by a continuously monitored Emission Limit Value (ELV) and the number of ELV exceedances by the legislator. Too many violations can lead to a lapse of the plant permit.

For quality reasons the PEMS must be checked regularly. For this purpose an AMS must run in parallel with the PEMS. In case of deviations, the PEMS model can be customised by an applications specialist.

All plants that need to record gas concentrations need a report. This report is created by a Data Acquisition and Handling System (DAHS). In the case of Emission Monitoring the DAHS compares emission concentrations with ELV's. If a PEMS is used as a backup in parallel with an AMS, the DAHS can take the PEMS values if the AMS is not delivering valid measurements. This way the overall availibity of the systems is improved. In case of Emission Monitoring the number of days without gas concentrations is often limited. Too many days without recordings can lead to a lapse of the plant permit.

Accordingly, there is a need to improve the means by gas analysis and emission prediction can be performed.

### SUMMARY OF THE INVENTION

Therefore, it would be advantageous to have an improved apparatus for gas analysis and emission prediction, system for gas analysis and emission prediction and a method for gas analysis and emission prediction.

The object of the present invention is solved with the subject matter of the independent claims, wherein further embodiments are incorporated in the dependent claims. It should be noted that the following described aspects of the invention apply also for the apparatus for gas analysis and emission prediction, for the system for gas analysis and emission prediction and for the method for gas analysis and emission prediction.

In a first aspect, there is provided an apparatus for gas analysis and emission prediction, comprising:
- an input unit; and
- a processing unit; and
- an output unit.

The input unit is configured to provide the processing unit with measurement sensor data relating to an emission source. The measurement sensor data comprises a plurality of process parameters of the emission source and at least one process parameter of the emission source for a subsequent required time period. The measurement sensor data comprises also a plurality of measured gas concentrations of the emission source. The processing unit is configured to implement a gas emission prediction model. The gas emission prediction model has been trained comprising utilisation of the plurality of process parameters and the plurality of measured gas concentrations. The gas emission prediction model is configured to determine a predicted gas concentration for a time period comprising utilisation of at least one process parameter for that time period. For the required time period the output unit is configured to output a gas concentration that is a measured gas concentration for the required time period if this is available or a predicted gas concentration for the required time period.

In other words, an Automatic Measurement System (AMS) controller is provided within which a Predictive Emission Monitoring System (PEMS) is integrated, where the PEMS model is generated from acquired data and can be optionally continually updated from such data. When a real gas concentration measurement is available, for example from an AMS, then this value is made available. However, if the measurements from the AMS are not available, the PEMS can provided gas concentration values.

In this manner, increased availability is provided, with respect to legal requirements for emissions monitoring, as the PEMS provides measurements in case of a failure or maintenance of the AMS. Also, the PEMS model can be continually updated and optimised (on-line or off-line) using collected data. In the case of an on-line method , application specialists are not required, because the automated algorithm of the PEMS model can be continuously optimised.

In an example, the processing unit is configured to determine if the output unit is to output the predicted gas concentration for the required time period.

In other words, the processing unit utilizes an algorithm to switch to PEMS determined gas concentrations in the situation when the AMS providing measurements has failed, is under maintenance, or has been removed once the PEMS model has been sufficiently validated.

In an example, the gas emission prediction model has been trained comprising utilisation of the at least one process parameter for the required time period.

In this manner, the processing unit can collect data for the optimization of the gas emission prediction model.

In an example, the gas emission prediction model will further be trained comprising utilisation of the at least one process parameter for the required time period.

In this manner, the gas emission prediction model, in effect a PEMS model, can be optionally continually or after a updated.

In an example, the process parameters comprises one or more of: temperature; pressure; volume flow; fuel composition; weather conditions.

In an example, the input unit is configured to accept data from one or more gas analysers.

In an example, the one or more gas analysers are comprised within an Automatic Measuring System "AMS".

In an example, the input unit comprises one or more gas analysers.

In an example, the input unit comprises an Automatic Measuring System "AMS" that comprises the one or more gas analysers.

In a second aspect, there is provided a system for gas analysis and emission prediction, comprising:
- an Automatic Measuring System "AMS";
- an apparatus according to the first aspect; and
- a Data Acquisition and Handling System; "DAHS"

The DAHS is configured to compare the gas concentration for the required time period with at least one threshold value to create a report.

In a third aspect, there is provided a system for gas analysis and emission prediction, comprising:
- an apparatus according to the first aspect; and
- a Data Acquisition and Handling System; "DAHS",

The DAHS is configured to compare the gas concentration for the required time period with at least one threshold value to create a report.

In a fourth aspect, there is provided a method for gas analysis and emission prediction, comprising:
a) providing from an input unit to a processing unit measurement sensor data relating to an emission source, wherein the measurement sensor data comprises a plurality of process parameters of the emission source and at least one process parameter of the emission source for a subsequent required time period, and wherein the measurement sensor data comprises a plurality of measured gas concentrations of the emission source;
b) implementing by the processing unit a gas emission prediction model, wherein the gas emission prediction model has been trained comprising utilisation of the plurality of process parameters and the plurality of measured gas concentrations, and wherein the gas emission prediction model is configured to determine a predicted gas concentration for a time period comprising utilisation of at least one process parameter for that time period; and
c) outputting by an output unit a gas concentration that is a measured gas concentration for the required time period if this is available,
   or,
d) outputting by the output unit a predicted gas concentration for the required time period.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
- Fig. 1: shows a schematic representation of an automated measurement system;
- Fig. 2: shows a schematic representation of components of an automated measurement system;
- Fig. 3: shows a schematic representation of a predictive emission monitoring system;
- Fig. 4: shows a schematic representation of an automated measurement system and a predictive emission monitoring system;
- Fig. 5: shows a schematic representation of a predictive and automated measuring system; and
- Fig. 6: shows a schematic representation of a predictive and automated measuring system.

### DETAILED DESCRIPTION OF EMBODIMENTS

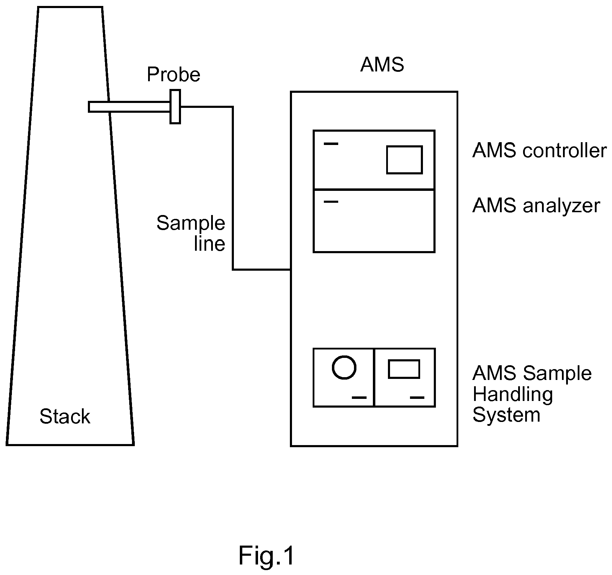

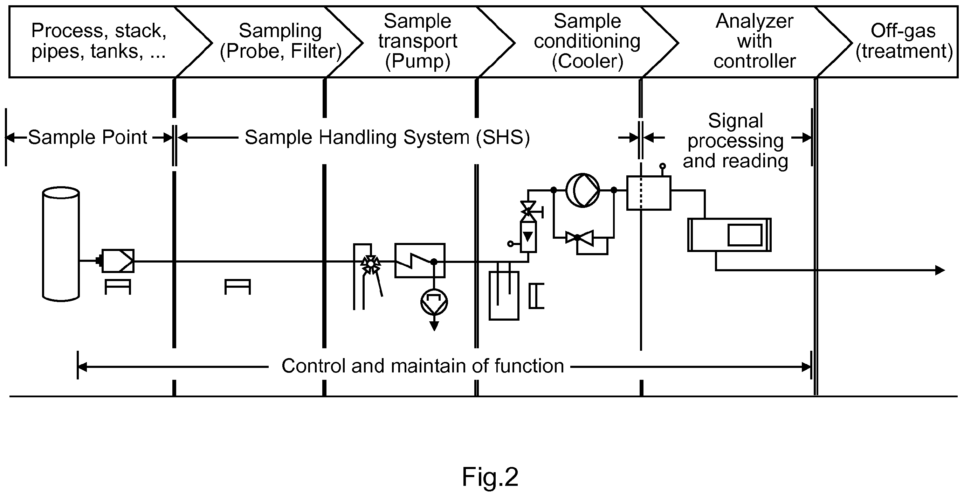

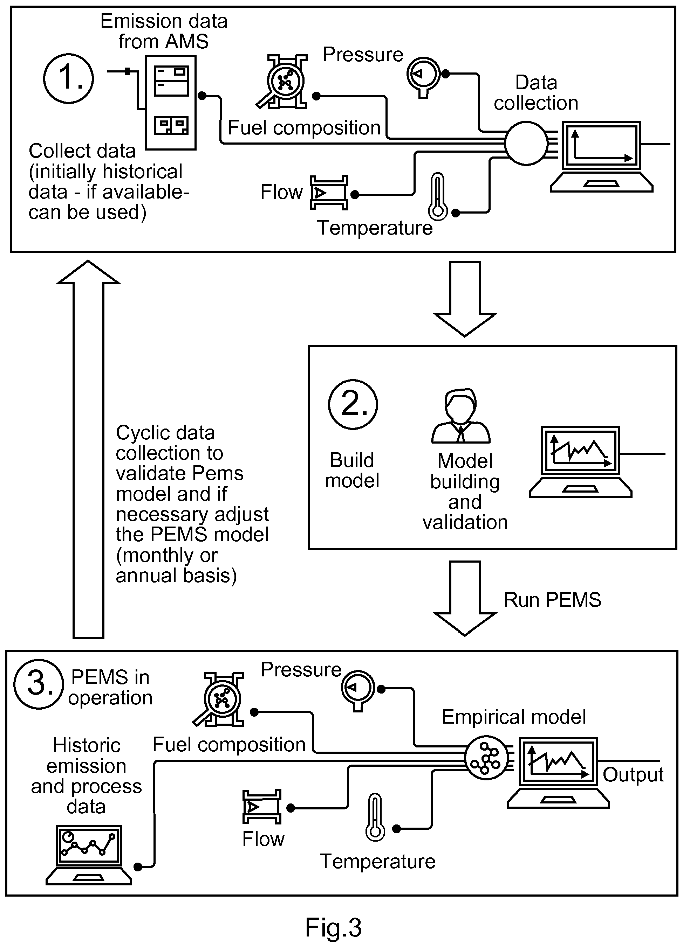

Figs. 1 and 2 shows examples of an Automatic Measuring System (AMS) and Fig. 3 shows an example of a Predictive Emission Monitoring System (PEMS). These are standalone independent products. An AMS uses gas analyzers to measure emissions. A PEMS is a software solution for determining gas concentrations. A PEMS defines the relationship between a number of characteristic process parameters of an emission source, e.g. temperature, pressure and volume flow and the emission concentration. The PEMS model is modeled by an application specialist. PEMS are considered an alternative or failover for AMS.

For emission sources that do not have historical process data and AMS measured values obtained in parallel, they must first be collected in parallel in a data collection phase in order to then be able to create a PEMS model (= training phase). It is important to record data on all possible operating states of the emission source under as many environmental conditions as possible, so that the PEMS model to be created. Then later the PEMS can be used without the AMS to predict the correct measured values. For economic reasons, however, attempts are made to keep this learning phase as short as possible (in the order of days / weeks).

In particular, two points that have an influence on the quality of the PEMS model are important:
1.The recording of all year-related different weather conditions; and
2.The coverage of the full range emission levels of the emission source.

The second point is important, because plant conditions are difficult to simulate and the operator of an emission source may have has no interest in bringing it about. In particular, the emission of the maximum concentration is in many cases regulated by a continuously monitored emission limit value (ELV) and the number of limit value exceedances by the legislator.

For quality reasons, PEMS must be checked regularly. For this purpose, an AMS must measure parallel to the PEMS. In case of deviations, the PEMS model may need to be adapted by an application specialist.

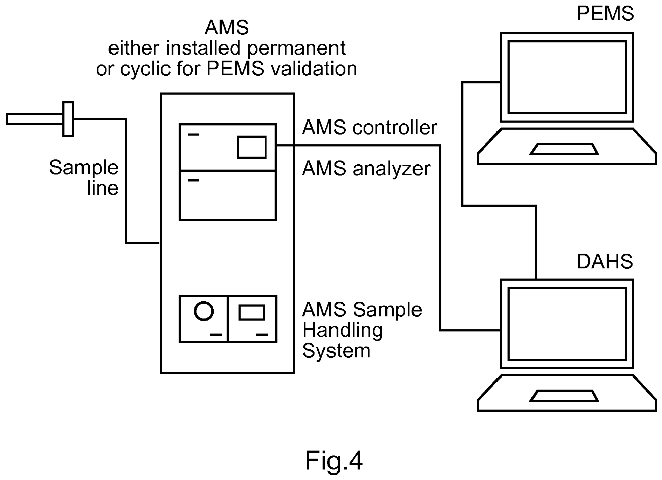

As shown in Fig. 4 when a PEMS is operated as back-up, in parallel to an AMS, a Data Acquisition and Handling System (DAHS) that compares readings with ELVs and generates authority-relevant reports must collect readings from the AMS and PEMS (two interfaces) and identify which ones measured value is the valid one.

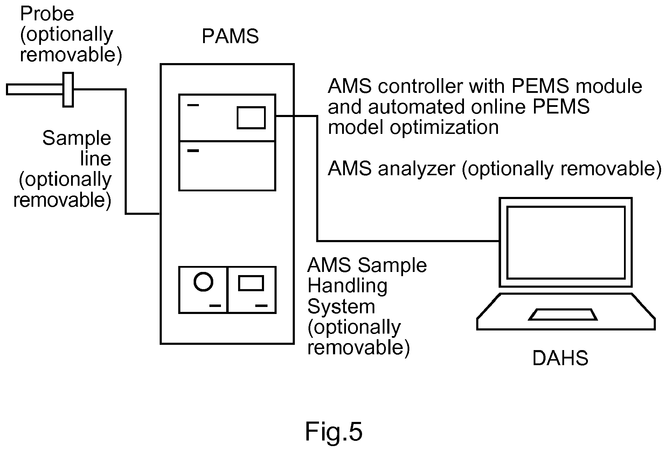

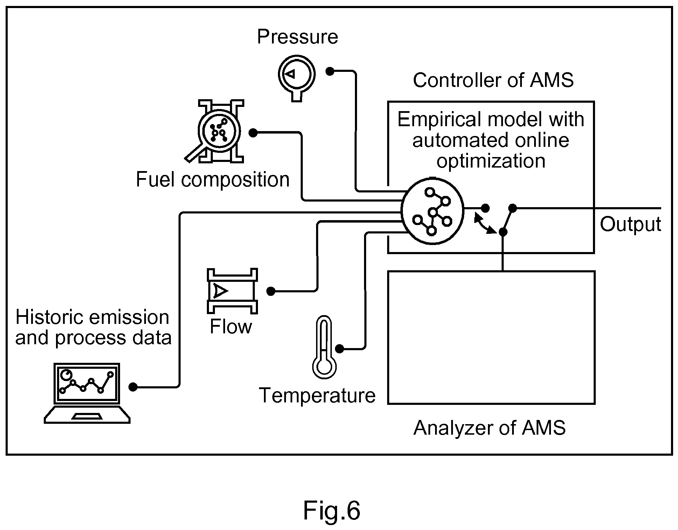

The solution to these problems in shown in Figs. 5 and 6.
Thus, there is an apparatus for gas analysis and emission prediction. This has an input unit, a processing unit, and an output unit. The input unit is configured to provide the processing unit with measurement sensor data relating to an emission source. The measurement sensor data comprises a plurality of process parameters of the emission source and at least one process parameter of the emission source for a subsequent required time period. The measurement sensor data comprises a plurality of measured gas concentrations of the emission source. The processing unit is configured to implement a gas emission prediction model. The gas emission prediction model has been trained comprising utilisation of the plurality of process parameters and the plurality of measured gas concentrations. The gas emission prediction model is configured to determine a predicted gas concentration for a time period comprising utilisation of at least one process parameter for that time period. For the required time period the output unit is configured to output a gas concentration that is a measured gas concentration for the required time period if this is available or a predicted gas concentration for the required time period.

In an example, both the measured gas concentration and the predicted gas concentration can be output.

According to an example, the processing unit is configured to determine if the output unit is to output the predicted gas concentration for the required time period. According to an example, the gas emission prediction model has been trained comprising utilisation of the at least one process parameter for the required time period.

According to an example, the gas emission prediction model will further be trained comprising utilisation of the at least one process parameter for the required time period.

According to an example, the process parameters comprises one or more of: temperature; pressure; volume flow; fuel composition; weather conditions.

According to an example, the input unit is configured to accept data from one or more gas analysers.

According to an example, the one or more gas analysers are comprised within an Automatic Measuring System "AMS".

According to an example, the input unit comprises one or more gas analysers.

According to an example, the input unit comprises an Automatic Measuring System "AMS" that comprises the one or more gas analysers.

Thus as a whole, in one embodiment there is a system for gas analysis and emission prediction. This has an Automatic Measuring System "AMS", and an apparatus for gas analysis and emission prediction as described above. The system also has a Data Acquisition and Handling System "DAHS". The DAHS is configured to compared the gas concentration for the required time period with at least one threshold value to create a report.

Thus as a whole, in another embodiment there is a system for gas analysis and emission prediction. This has an apparatus for gas analysis and emission prediction as described above that incorpiates an AMS. The system also has a Data Acquisition and Handling System "DAHS". The DAHS is configured to compared the gas concentration for the required time period with at least one threshold value to create a report.

There is also an associated method for gas analysis and emission prediction, comprising:
a) providing from an input unit to a processing unit measurement sensor data relating to an emission source, wherein the measurement sensor data comprises a plurality of process parameters of the emission source and at least one process parameter of the emission source for a subsequent required time period, and wherein the measurement sensor data comprises a plurality of measured gas concentrations of the emission source;
b) implementing by the processing unit a gas emission prediction model, wherein the gas emission prediction model has been trained comprising utilisation of the plurality of process parameters and the plurality of measured gas concentrations, and wherein the gas emission prediction model is configured to determine a predicted gas concentration for a time period comprising utilisation of at least one process parameter for that time period; and
c) outputting by an output unit a gas concentration that is a measured gas concentration for the required time period if this is available,
   or,
d) outputting by the output unit a predicted gas concentration for the required time period.

In an example, both the measured gas concentration and the predicted gas concentration can be output.

In an example, in step b) the gas emission prediction model has been trained comprising utilisation of the at least one process parameter for the required time period.

In an example, following step b) the gas emission prediction model will further be trained comprising utilisation of the at least one process parameter for the required time period.

In an example, process parameters comprises one or more of: temperature; pressure; volume flow; fuel composition; weather conditions.

In an example, the input unit is configured to accept data from one or more gas analysers.

In an example, the one or more gas analysers are comprised within an Automatic Measuring System "AMS".

In an example, the input unit comprises one or more gas analysers.

In an example, input unit comprises an Automatic Measuring System "AMS" that comprises the one or more gas analysers.

Continuing with Fig. 5, by integrating a PEMS into the AMS controller, the data collection phase can run indefinitely. This allows the PEMS model to be constantly optimized. Operating states of the emission source can be recorded that are not recorded in a time-limited data collection phase. Also, online automated PEMS modeling eliminates the application specialist. Furthermore, by integrating a PEMS into the AMS controller, there is only one interface to the DAHS. Thus, with a combined AMS and PEMS there is only one interface and it always issues the best measurement.

Further advantages are:
1. Increasing the availability (-> e.g. legal requirements for emission monitoring), as the PEMS delivers measured values during times of failure / maintenance of the AMS;
2. Secure PEMS models, as data is permanently collected and the model can be optimized;
3. No application specialist required if an on-line automated algorithm continuously optimizes the PEMS model;
4. One interface (PAMS) instead of two interfaces (AMS and PEMS);
5. By parallel operation AMS and PEMS, the PEMS can be validated automatically
6. By parallel operation AMS and PEMS, the AMS can be validated automatically

After a sufficient data collection phase and validation of the PEMS by the AMS, the AMS can be removed. This eliminates the operating costs for the AMS for the operator of the emission source. Gas concentrations, e.g. NH3 that is not measured with the AMS (measures, for example, NO and O2), with the integrated PEMS can be included in the PEMS model. For this, after a data collection phase, a model for the missing gas concentration NH3 has to be created. Thereafter, the AMS can be removed for NH3. The NH3 result can now be a function of the process variables and the measured values of the online AMS. This increases the quality of the NH3 model, which is not exclusively based on process variables. Often there is a correlation of the nitrogen compounds (NO, O2, NH3) with each other.

As shown in Fig. 6, as the PEMS software is integrated into the AMS controller, an algorithm can turn on the PEMS readings as soon as the AMS fails or is in maintenance. There is only one interface on which the "valid" measured value is always output. Also, an automated online algorithm continuously optimizes the PEMS model. As discussed above, after a sufficient validation phase, the AMS (excluding the AMS controller) can be easily removed. That is, the sampling probe, a measuring line which supplies the extracted gas to an analysis unit, the gas treatment and the gas analyzer in addition to all necessary supply lines can be removed. The trained PEMS can then provide the required predicted measurements based on process parameters.

The PEMS integrated in the AMS controller can also be used to monitor the performance of the AMS. AMS are based on hardware, that are sometimes also consumables. Hardware such as sources, measuring cells, detectors, etc. are aging and are subject to environmental effects like temperature, pressure, etc. This has an influence on the precision and accuracy of the AMS, e.g. AMS are drifting. A PEMS, which has proven precision and accuracy, can be used to monitor the AMS performance. In case the PEMS detects a wrongful behavior of the AMS, it can issue maintenance request before the AMS fails. This fact has two advantages:
1. The uptime of the AMS is increased,
2. Consumables of the AMS can be used until short before the end of their lifetime. Hence the economibility is increased, since consumables are only replaced when necessy.

## Claims

1. An apparatus for gas analysis and emission prediction, comprising:
- an input unit;
- a processing unit; and
- an output unit;
wherein, the input unit is configured to provide the processing unit with measurement sensor data relating to an emission source;
wherein, the measurement sensor data comprises a plurality of process parameters of the emission source and at least one process parameter of the emission source for a subsequent required time period;
wherein, the measurement sensor data comprises a plurality of measured gas concentrations of the emission source;
wherein, the processing unit is configured to implement a gas emission prediction model, wherein the gas emission prediction model has been trained comprising utilisation of the plurality of process parameters and the plurality of measured gas concentrations;
wherein, the gas emission prediction model is configured to determine a predicted gas concentration for a time period comprising utilisation of at least one process parameter for that time period; and
wherein, for the required time period the output unit is configured to output a gas concentration that is a measured gas concentration for the required time period if this is available or a predicted gas concentration for the required time period.

2. Apparatus according to claim 1, wherein the processing unit is configured to determine if the output unit is to output the predicted gas concentration for the required time period.

3. Apparatus according to any of claims 1-2, wherein the gas emission prediction model has been trained comprising utilisation of the at least one process parameter for the required time period.

4. Apparatus according to any of claims claim 1-2, wherein the gas emission prediction model will further be trained comprising utilisation of the at least one process parameter for the required time period.

5. Apparatus according to any of claims 1-4, wherein process parameters comprises one or more of: temperature; pressure; volume flow; fuel composition; weather conditions.

6. Apparatus according to any of claims 1-5, wherein the input unit is configured to accept data from one or more gas analysers.

7. Apparatus according to claim 6, wherein the one or more gas analysers are comprised within an Automatic Measuring System "AMS".

8. Apparatus according to any of claims 1-5, wherein the input unit comprises one or more gas analysers.

9. Apparatus according to claim 8, wherein the input unit comprises an Automatic Measuring System "AMS" that comprises the one or more gas analysers.

10. System for gas analysis and emission prediction, comprising:
- an Automatic Measuring System "AMS";
- an apparatus according to any of claims 1-7; and
- a Data Acquisition and Handling System "DAHS",
wherein, the DAHS is configured to compared the gas concentration for the required time period with at least one threshold value to create a report.

11. System for gas analysis and emission prediction, comprising:
- an apparatus according to any of claims 1-5, 8-9; and
- a Data Acquisition and Handling System "DAHS"
wherein, the DAHS is configured to compared the gas concentration for the required time period with at least one threshold value to create a report.

12. System for gas analysis and emission prediction, comprising:
- an Automatic Measuring System "AMS"; and
- an apparatus according to any of claims 1-9;
wherein, the apparatus is configured to monitor the performance of the AMS.

13. A method for gas analysis and emission prediction, comprising:
a) providing from an input unit to a processing unit measurement sensor data relating to an emission source, wherein the measurement sensor data comprises a plurality of process parameters of the emission source and at least one process parameter of the emission source for a subsequent required time period, and wherein the measurement sensor data comprises a plurality of measured gas concentrations of the emission source;
b) implementing by the processing unit a gas emission prediction model, wherein the gas emission prediction model has been trained comprising utilisation of the plurality of process parameters and the plurality of measured gas concentrations, and wherein the gas emission prediction model is configured to determine a predicted gas concentration for a time period comprising utilisation of at least one process parameter for that time period; and
c) outputting by an output unit a gas concentration that is a measured gas concentration for the required time period if this is available,
or,
d) outputting by the output unit a predicted gas concentration for the required time period.
